# EUROPEAN PATENT SPECIFICATION

(11) **EP 4 421 302 B1**
(45) Date of publication and mention of the grant of the patent: **26.11.2025**
(21) Application number: 24152554.2
(22) Date of filing: 18.01.2024
(51) Int. Cl.: F02D 19/06, F02B 25/04

(54) **A DUEL-FUEL LARGE DIESEL ENGINE AND A METHOD FOR OPERATING**
DUAL-FUEL GROSSDIESELMOTOR UND VERFAHREN ZUM BETRIEB
MOTEUR DIESEL À DOUBLE CARBURANT ET SON PROCÉDÉ DE FONCTIONNEMENT

(30) Priority: 21.02.2023 EP 23157683
(43) Date of publication of application: 28.08.2024
(73) Proprietor: WinGD AG, 8400 Winterthur (CH)
(72) Inventor: Cococcetta, Fabio, 8006 Zürich (CH)
(74) Representative: IPS Irsch AG

(56) References cited:
- WO-A1-2008/087052
- WO-A1-2015/025079
- DE-A1- 102014 005 740

## Description

The invention relates to a dual-fuel large diesel engine and a method for operating such an engine according to the preamble of the independent patent claim of the respective category.

Large diesel engines, which can be configured as two-stroke or four-stroke engines, for example as longitudinally scavenged two-stroke large diesel engines, are often used as drive units for ships or in stationary operation, e.g. to drive large generators for generating electrical energy. The engines usually run for considerable periods in continuous operation, which places high demands on operational safety and availability. As a consequence, particularly long maintenance intervals, low wear and an economical handling of the operating materials are central criteria for the operator. Large diesel engines typically have cylinders, which inner diameter (bore) is at least 200 mm. Nowadays, large diesel engines with a bore of up to 960 mm or even more are used. Within the framework of this application the term "large diesel engine" designates an internal combustion engine with a bore of the cylinder(s), which is at least 200 mm and preferably at least 300 mm.

Large diesel engines are classically operated with heavy fuel oil. Under the aspects of economic and efficient operation, compliance with exhaust-gas limit values, sustainability and the availability of resources, alternatives to the fuel heavy fuel oil are now also being sought for large diesel engines. In this respect, both liquid fuels are used, i.e. fuels that are introduced into the combustion chamber in the liquid state, and gaseous fuels, i.e. fuels that are introduced into the combustion chamber in the gaseous state.

Examples of liquid fuels as known alternatives to heavy fuel oil are other heavy hydrocarbons, which are particularly left over as residues from oil refining, alcohols, in particular methanol or ethanol, ammonia, gasoline, diesel, or also emulsions or suspensions. For example, it is known to use emulsions known as MSAR (Multiphase Superfine Atomized Residue) as fuel. A well-known suspension is that of coal dust and water, which is also used as fuel for large engines. As gaseous fuels, natural gases such as LNG (liquefied natural gas), liquefied gases such as LPG (liquefied petroleum gas) or ethane are known.

In particular, large diesel engines are also known which can be operated with at least two different fuels, whereby the engine is operated either with one fuel or with the other fuel depending on the operating situation or environment. It is also known to concurrently inject the two different fuels into the combustion chamber of the cylinder.

Large diesel engine that can be operated with two different fuels are referred to as dual-fuel large diesel engine. Depending on the two fuels, said engines may be operated in a liquid mode in which a liquid fuel is introduced into the cylinder for combustion and in a gas mode in which a gas is introduced into the cylinder as fuel.

Large diesel engines, which can be operated with at least two or even more different liquid or gaseous fuels, are often operated in different operating modes depending on the fuel currently in use. In the operating mode often referred to as diesel operation, the combustion of the fuel generally takes place according to the principle of compression ignition or self-ignition of the fuel. In the mode often referred to as Otto operation, combustion takes place by induced ignition of an ignitable pre-mixed air-fuel mixture. This induced ignition can take place, for example, by an electrical spark, e.g. with a spark plug, or also by the self-ignition of a small injected amount of fuel, which then causes the induced ignition of another fuel. The small amount of fuel intended for self-ignition is often injected into a pre-chamber connected to the combustion chamber.

Furthermore, mixed forms using both Otto and diesel operation are also known.

Within the framework of this application, the term "large diesel engine" refers to such engines, which can be operated at least in a diesel operation. In particular, the term "large diesel engine" thus also comprises such dual-fuel large engines that can be operated in another mode, e.g. Otto operation, in addition to diesel operation.

Within the framework of this application, the term "gas mode" or "operation in gas mode" refers to using only the gas or gaseous fuel for torque-generating combustion as fuel. As already mentioned, it is possible and quite common that in the gas mode for the induced ignition of the pre-mixed air-fuel mixture a small amount of a self-igniting liquid fuel, e.g. marine gas oil (MGO), marine diesel oil (MDO) or very low sulfur fuel oil, is injected to carry out the induced ignition, but nevertheless the combustion process which generates the torque is operated completely with the gas or the gaseous fuel.

This process of induced ignition by self-ignition of a small amount of a liquid or another self-igniting fuel is sometimes referred to as pilot injection. This pilot injection has nothing to do with the injection of the liquid fuel into the combustion chamber when the large diesel engine is operated in diesel operation in a liquid mode. A different injection device is usually, but not necessarily, used for the pilot injection than for the injection of the liquid diesel fuel in the liquid mode. In addition, in pilot injection, the small amount of the liquid fuel is also frequently not injected directly into the combustion chamber, but into at least one pre-chamber that is connected to the combustion chamber via a channel.

The application WO2015025079A1 discloses a fuel injection system for an engine which comprises a first fuel circuit for injecting liquid fuel and a second fuel circuit for injecting liquid pilot fuel into the cylinders of the engine. The first fuel circuit comprises at least one fuel injection pump and at least one fuel injector for each cylinder. The second fuel circuit is provided with at least one high-pressure pump and comprises at least one pilot fuel injector for each cylinder. The fuel injection system comprises means for introducing liquid pilot fuel from the second fuel circuit into the first fuel circuit between the fuel injection pumps and the fuel injectors.

In dual-fuel large diesel engines two different fuels, namely a first fuel and a second fuel are used for the combustion process in the cylinder. The first fuel is typically a diesel fuel for self-ignition in the combustion chamber. Diesel fuels are for example heavy fuel oil (HFO), marine diesel oil (MDO) or marine gas oil (MGO). As second fuel methanol, a blend of methanol and water, and ammonia are gaining more and more importance nowadays.

However, such second (or alternative) fuels like methanol and ammonia can cause corrosion problems in the fuel distribution system, in particular during standstill of the engine or during operation with the first fuel. The stagnant second fuel, e.g. methanol or ammonia, corrosively attacks the pipes or other components of the fuel distribution system. Furthermore, there is the risk that methanol or ammonia escapes from the engine, e.g. as vapor, into the space which is accessible to engine maintenance or engine operating personnel. This constitutes a health hazard requiring comprehensive mitigation measures. To address this problem, it is known in the art, to flush the fuel distribution system as well as the injectors for the alternative fuel with a harmless gas, in particular with nitrogen, to remove all residues of the alternative fuel. This requires a separate purging system, including a reservoir, piping, valves and so on for the purging medium, e.g. nitrogen, which is an additional effort, both from the constructional and the cost perspective.

Starting from this state of the art, it is therefore an object of the invention to propose a dual-fuel large diesel engine, which is operable with a first fuel and with a second fuel, wherein the second fuel can be reliably removed from the fuel distribution system and the injectors in a very simple manner. Furthermore, it is an object of the invention, to propose a method for operating such a dual-fuel large diesel engine.

The subject matter of the invention satisfying these objects is characterized by the features of the independent patent claim of the respective category.

Thus, according to the invention, a duel-fuel large diesel engine is proposed, comprising at least one cylinder having a combustion chamber, wherein a piston is arranged in the cylinder for a reciprocating movement between a top dead center position and a bottom dead center position, wherein the cylinder is provided with a first fuel injector for injecting a first fuel into the combustion chamber, and a second fuel injector for injecting a second fuel into the combustion chamber, wherein the first fuel is different from the second fuel, the large diesel engine further comprising a first fuel supply system for supplying the first fuel to the cylinder and a second fuel supply system for supplying the second fuel to a fuel distribution system, wherein the fuel distribution system is configured to deliver the second fuel from the second fuel supply system to the second fuel injector. A purge line is provided connecting the first fuel supply system to the fuel distribution system, wherein a switching member is provided for opening and closing a flow connection through the purge line.

By means of the purge line connecting the first fuel supply system to the fuel distribution system for the second fuel, it is possible to purge the fuel supply system and the second fuel injector(s) with the first fuel, therewith removing all residues of the second fuel both from the fuel distribution system and from the second fuel injector(s). In particular, it is no longer necessary to provide a separate purge system for the fuel distribution system, such as a nitrogen purging system, because the first fuel is used to rinse the second fuel out of the fuel distribution system and the second fuel injector(s). Thus, the dual-fuel large diesel engine becomes less complex, without reducing the operational safety and the reliability of the engine.

Furthermore, using the first fuel, for example a diesel fuel, for purging the fuel distribution system of the second fuel has the additional advantage to prevent the fuel distribution system and the second fuel injector(s) from corrosion due to the creation of on oil film on the surfaces e.g. of the pipes and the second fuel injectors, which came in contact with the second fuel. Said oil film is created during the purging with the first fuel.

Preferably, the purging of the fuel distribution system for the second fuel and the second fuel injectors is performed each time, when a switching from a second operational mode, in which the second fuel is supplied to the combustion chamber, to a first operational mode, in which only the first fuel is supplied to the combustion chamber, is performed.

Furthermore, it is preferred to perform the purging with the first fuel, when the large diesel engine shall be stopped after operation with the second fuel.

Due to the reliable purging with the first fuel, there is no risk that the second fuel escapes from the engine, e.g. by evaporation.

Preferably, the second fuel supply system is configured to supply the second fuel to the fuel distribution system with a second fuel low pressure, wherein the fuel distribution system comprises a pressure amplifier for increasing the pressure of the second fuel from the second fuel low pressure to a second fuel injection pressure. As an example, the second fuel supply system delivers the second fuel, e.g. ammonia, to the fuel distribution system with the second fuel low pressure of 15-85 bar (1.5-8.5 MPa). The pressure amplifier increases the pressure of the second fuel to the second fuel injection pressure of 190-1000 bar (19-100 MPa). Preferably, the second fuel injection pressure is in the range of 250-600 bar (25-60 MPa).

It is preferred that the purge line supplies the first fuel to the fuel distribution system with a first fuel low pressure, when the flow connection is open, wherein the first fuel low pressure is at least 20% larger than the second fuel low pressure. In the aforementioned example the first fuel low pressure is for example 2-4 bar (0.2-0.4 MPa) higher than the second fuel low pressure.

Depending on the location of the first fuel supply system, to which the purge line is connected, the pressure of the first fuel has to be reduced to the first fuel low pressure before the first fuel enters the fuel distribution system. To this end it is preferred that the switching member is configured for reducing the pressure of the first fuel to the first fuel low pressure.

As a further advantageous measure, a non-return device is arranged between the purge line and the second fuel supply system for preventing a flow of the first fuel into the second fuel supply system.

For many applications it is preferred that the cylinder comprises a plurality of second fuel injectors, for example two second fuel injectors or three second fuel injectors. Providing more than one second fuel injector has the advantage that the second fuel is better distributed within the combustion chamber.

It is possible to configure the fuel distribution system with only one pressure amplifier, which supplies the second fuel pressurized to the second fuel injection pressure to each of the second injectors of the cylinder. In other embodiments the fuel distribution system comprises a plurality of pressure amplifiers, each of which is dedicated to exactly one of the second fuel injectors. Thus, for each second fuel injector there is an individual pressure amplifier, which delivers the second fuel only to said second fuel injector.

In particular for those embodiments having pressure amplifiers dedicated in each case to exactly one of the second fuel injectors it is a preferred configuration that each pressure amplifier is integrated in a second fuel injector.

According to a preferred embodiment, the cylinder comprises a cylinder cover for delimiting the combustion chamber, wherein each first fuel injector as well as each second fuel injector is arranged in the cylinder cover.

Preferably, the first fuel is a diesel fuel for self-ignition in the combustion chamber, such as heavy fuel oil (HFO), marine diesel oil (MDO) or marine gas oil (MGO).

Furthermore, it is preferred that the second fuel is methanol or ammonia.

Preferably, the dual-fuel large diesel engine is configured as a longitudinally scavenged two-stroke large diesel engine.

Furthermore, a method for operating a dual-fuel large diesel engine is proposed, wherein the dual-fuel large diesel engine is configured according to the invention. The method comprises a switching from a second operational mode, in which only the second fuel is supplied to the combustion chamber, to a first operational mode, in which only the first fuel is supplied to the combustion chamber. The switching comprises the steps of:
- operating the engine at a desired load or speed,
- actuating the switching member to open the flow connection through the purge line,
- concurrently injecting a first amount with the first fuel injectors and a second amount with the second injectors into the combustion chamber,
- continuously adjusting the first amount and the second amount such that the desired load or speed is maintained,
- reducing the second amount and increasing the first amount until the second amount equals zero.

During the fuel changeover, emissions have to be guaranteed through proper engine calibration parameters or other type of emission abatement technologies, satisfying as well the regulation in force.

Thus, during the switching from the second operational mode to the first operational mode both the first fuel injectors injecting the first fuel into the combustion chamber and the second fuel injectors injecting the second fuel into the combustion chamber are used. Furthermore, the switching member is actuated to open the flow connection through the purge line into the fuel distribution system. When the flow connection through the purge line is open, the second fuel is flushed from the fuel distribution system and from the second fuel injector(s) during the next strokes of the piston in the cylinder. The second amount of the fuel injected with the second fuel injectors is reduced more and more until it becomes zero. After that, only the first fuel injector(s) providing the first fuel to the combustion chamber is/are used. The engine is operating in the first operational mode and the second fuel is completely flushed from the fuel distribution system, from the pressure amplifier(s) and from the second fuel injector(s).

It is a preferred measure that the switching is performed before the large diesel engine is stopped, such that the large diesel engine is stopped during operation in the first operational mode. Thus, when the large diesel engine is operated in the second operational mode and shall be stopped, it is preferred to first perform a switching to the first operational mode and then to stop or to shut down the large diesel engine.

Furthermore, it is preferred that the supply from the second fuel to the fuel distribution system is prevented during the switching from the second operational mode to the first operational mode. Thus, as soon as the switching has been initiated, the second fuel can no longer enter the fuel distribution system. The second fuel, which is still present in the fuel distribution system and the second fuel injectors is flushed by means of the first fuel during a few strokes of the piston after initiating the switching.

Further advantageous measures and embodiments of the invention result from the dependent claims.

In the following, the invention is explained in more detail on the basis of embodiments and referring to the drawing. In the drawing shows:

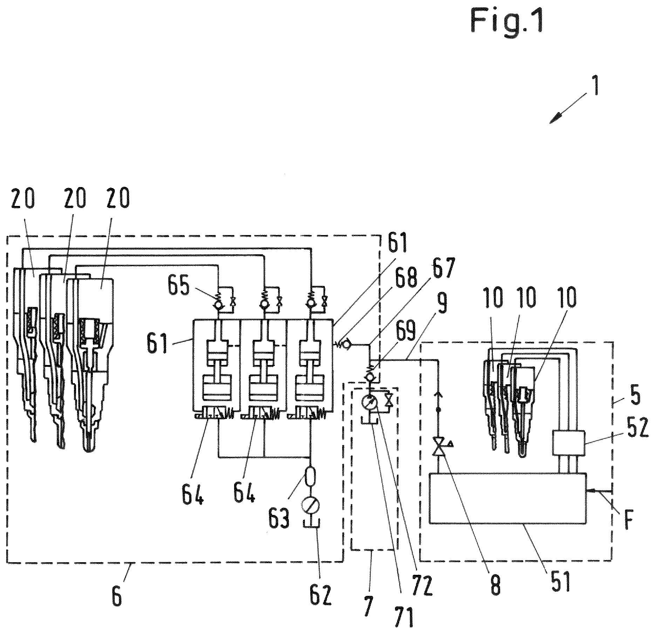

- Fig. 1:: a schematic representation of an embodiment of a dual-fuel large diesel engine according to the invention.

Fig. 1 shows a schematic representation of an embodiment of a dual-fuel large diesel engine according to the invention, which is designated in its entirety with reference numeral 1. Large diesel engines as such are known in the art in various different configurations. Therefore, in Fig. 1 only the system for distributing the fuels to the cylinder(s) of the large diesel engine 1 is shown, because this is sufficient for the understanding of the invention.

The term "large diesel engine" refers to such internal combustion engines that are usually used as drive unit for ships or also in stationary operation, e.g. to drive large generators for generating electrical energy. Typically, the cylinders of a large diesel engine each have an inner diameter (bore) of at least about 200 mm. The term "longitudinally scavenged" means that the scavenging or charging air is introduced into the cylinder in the area of the lower end and an exhaust valve is arranged in or at a cylinder cover located at the upper end of the cylinder.

Furthermore, the term "large diesel engine" refers to such engines, which can be operated at least in a diesel operation. In particular, the term "large diesel engine" thus also comprises such large engines that can be operated in another mode, e.g. Otto operation, in addition to diesel operation.

A dual-fuel large diesel engine is an engine which can be operated with two different fuels, namely with a first fuel and with a second fuel. In particular, the dual-fuel large diesel engine can be operated with the first fuel in a liquid mode in which only a liquid first fuel is injected into a combustion chamber of a cylinder. Usually the liquid fuel, for example heavy fuel oil (HFO), marine diesel oil (MDO) or marine gas oil (MGO), is injected directly into the combustion chamber at a suitable time and ignites there according to the diesel principle of self-ignition. The large diesel engine can also be operated with the second fuel, which may be a gaseous fuel, which is injected into the combustion chamber in a gaseous state, or another liquid fuel, which is injected into the combustion chamber in the liquid state.

The second fuel may be a self-igniting fuel, such that during operation with the second fuel the large diesel engine is also operated in a diesel operation. It is also possible, that the second fuel is a fuel for an Otto operation, i.e. with induced ignition of the second fuel. In this case, the second fuel is injected in the combustion chamber to form a premixed air-fuel mixture with the scavenging air. The air-fuel mixture is induced ignited in the combustion chamber according to the Otto principle. This induced ignition is usually caused by introducing a small amount of self-igniting fuel (e.g. diesel or heavy fuel oil) into the combustion chamber or into a pre-chamber at a suitable moment, which fuel then ignites itself and causes the induced ignition of the air-fuel mixture in the combustion chamber.

Introducing a small amount of a self-igniting liquid or gaseous fuel into the combustion chamber or into at least one pre-chamber for the induced ignition of the main fuel (here the second fuel) is also referred to as pilot ignition. Beside a diesel oil it is also possible to use a gas or an alcohol such as methanol as pilot fluid for the pilot ignition.

In other embodiments the induced ignition is made by way of a spark ignition or a laser pulse or by any other means which is suited for igniting the second fuel in the combustion chamber.

In the following description reference is made to a preferred embodiment, in which the first fuel is a diesel fuel for self-ignition and the second fuel is methane or ammonia. The diesel fuel is for example HFO, MDO or MGO). Regarding the second fuel methane or ammonia, it is preferred that the operation with the second fuel is an operation according to the Otto principle, i.e. with an induced ignition of the second fuel in the combustion chamber, preferably by pilot ignition. However, in other embodiments the operation with the second fuel may be a diesel operation with self-ignition of the second fuel in the combustion chamber.

Furthermore, the dual-fuel large diesel engine can be operated in a mixed mode, in which both the first fuel and the second fuel are injected into the combustion chamber of the cylinder. In the mixed mode both the combustion of the first fuel and the combustion of the second fuel contribute to the generation of the torque.

In the embodiment described here, the dual-fuel large diesel engine is configured as a longitudinally scavenged dual-fuel two-stroke large diesel engine.

The dual-fuel large diesel engine has at least one but usually a plurality of cylinders. Inside each cylinder, a piston is arranged movable back and forth in a manner known per se along a cylinder axis between a top dead center position and a bottom dead center position. The piston is connected in a manner known per se to a crosshead via a piston rod, which crosshead is connected to a crankshaft via a push rod or connecting rod so that the movement of the piston is transmitted via the piston rod, the crosshead and the connecting rod to the crankshaft to rotate it. The upper side of the piston delimits together with a cylinder cover a combustion chamber into which the fuel for the combustion is introduced.

The structure and the individual components of a large diesel engine, such as the injection system for the fuels, the gas exchange system, the exhaust system or the turbocharger system for the supply of the scavenging or charging air, as well as the monitoring and control system for a large diesel engine are sufficiently known to the person skilled in the art both for the design as a two-stroke engine and for the design as a four-stroke engine and therefore need no further explanation here.

In the embodiment of a longitudinally scavenged two-stroke large diesel engine 1 described here, scavenging air slots are usually provided in the lower region of each cylinder or cylinder liner, which are periodically closed and opened by the movement of the piston in the cylinder, so that the scavenging air provided by the turbocharger under a charging pressure can flow into the cylinder through the scavenging air slots as long as they are open. In the cylinder cover a usually centrally arranged exhaust valve is provided, through which the exhaust gases can be discharged from the cylinder into the exhaust system after the combustion process. The exhaust system guides at least a part of the exhaust gases to a turbine of the turbocharger, whose compressor provides the scavenging air, which is also referred to as charging air, in an scavenge air receiver under the scavenge air pressure. The scavenge air receiver is in fluid communication with the scavenging air slots of the cylinders.

Fig. 1 shows a schematic representation of the fuel supply system of the dual-fuel large diesel engine 1. In Fig. 1 the fuel supply system is shown only for one cylinder of the large diesel engine. Usually, the large diesel engine comprises a plurality of cylinders. However, for the understanding of the invention it is sufficient to make reference to one cylinder only, because the fuel supply system is configured for all the other cylinders in an analogous manner as it is shown in Fig. 1.

The cylinder comprises at least one first fuel injector 10 for injecting the first fuel into the combustion chamber of the cylinder. Preferably, the cylinder comprises a plurality of first fuel injectors 10, for example two or three first fuel injectors 10, for uniformly distributing the first fuel in the combustion chamber. In the embodiment shown in Fig. 1 exactly three first fuel injectors 10 are provided. Each first fuel injector 10 is arranged in the cylinder cover of the cylinder in a manner which is known in the art. Preferably, the first fuel injectors 10 are arranged in the cylinder cover near the exhaust valve (not shown).

The cylinder further comprises at least one second fuel injector 20 for injecting the second fuel into the combustion chamber of the cylinder. Preferably, the cylinder comprises a plurality of second fuel injectors 20, for example two or three second fuel injectors 20, for uniformly distributing the second fuel in the combustion chamber. In the embodiment shown in Fig. 1 exactly three second fuel injectors 20 are provided. Each second fuel injector 20 is arranged in the cylinder cover of the cylinder in a manner which is known in the art. Preferably, the second fuel injectors 20 are arranged in the cylinder cover near the exhaust valve.

The large diesel engine 1 further comprises a first fuel supply system 5 for supplying the first fuel to the first fuel injectors 10. The first fuel supply system 5 may be configured in any manner known in the art for large diesel engines. The first fuel supply system 5 comprises a common rail system that supplies the first fuel, e.g. heavy oil, to the first fuel injectors 10 in the cylinder cover. The common rail system comprises a pressure reservoir 51, also called "fuel rail" or "accumulator", which contains the first fuel to be delivered to the cylinders under a high pressure that essentially corresponds to the injection pressure. Usually the pressure reservoir 51 is configured as a closed tubular vessel extending along all the cylinders of the engine 1. One or more fuel pumps (not shown) supply the pressure reservoir 51 with the first fuel under high pressure as indicated by the arrow with the reference numeral F in Fig. 1. The pressure of the first fuel in the pressure reservoir 51 has for example a value of 700-1000 bar but may also be higher or lower, and higher than the second fuel pressure. A first fuel booster pump (not shown) which is connected with a reservoir for the first fuel (not shown) delivers the first fuel to the fuel pumps.

The pressure reservoir 51 is in fluid communication with the first fuel injectors 10 for injecting the first fuel into the combustion chamber of the respective cylinder. Furthermore, an injection control device 52 is provided between the pressure reservoir 51 and the first fuel injectors 10 for controlling the injection of the first fuel, for example regarding the timing and the amount of first fuel for the respective injection process. The injection control device 52 is connected to an engine control unit (not shown).

Nowadays, a modern large diesel engine 1 is operated in a fully electronically controlled manner. The engine control unit operates and controls all functions of the large diesel engine 1, for example the operation of the exhaust valves for the gas exchange, the injection process for the fuels and the pilot injection timing (when pilot injection is required) by way of electric or electronic signals and commands. In addition, the engine control unit receives information from several detectors, sensors or measuring devices.

The large diesel engine 1 further comprises a second fuel supply system 7 and a fuel distribution system 6 for supplying the second fuel, e.g. methane or ammonia, to the second fuel injectors 20. The second fuel supply system 7 delivers the second fuel with a second fuel low pressure to the fuel distribution system 6. The fuel distribution system 6 comprises at least one pressure amplifier 61 for increasing the pressure of the second fuel from the second fuel low pressure to the second fuel injection pressure, with which the second fuel is injected into the combustion chamber with the second fuel injectors 20.

It is also possible to provide only one pressure amplifier 61 in the fuel distribution system 6. The one pressure amplifier 61 is then connected to each of the second fuel injectors 20 of the cylinder. Thus, in each cylinder there is only one pressure amplifier 61 supplying the second fuel with the second fuel injection pressure to all second fuel injectors 20 of this cylinder.

In the embodiment illustrated in Fig. 1 the fuel distribution system 6 for the second fuel comprises a plurality of pressure amplifiers 61, namely three pressure amplifiers 61. Each pressure amplifier 61 is dedicated to exactly one of the three second fuel injectors 20, i.e. for each second fuel injector 20 a separate pressure amplifier 61 is provided, which supplies the second fuel with the second fuel injection pressure to the respective second fuel injector 20.

In particular for those embodiments, where a separate pressure amplifier 61 is provided for each of the second fuel injectors 20 it is preferred that the respective pressure amplifier 61 is integrated in the respective second fuel injector 20, such that the second fuel injector 20 and the dedicated pressure amplifier 61 are configured as a constructional unit.

Each pressure amplifier 61 may be configured in a manner that is known in the art. Each pressure amplifier 61 is for example configured as a hydraulic pressure amplifier 61 in which a hydraulic fluid, e.g. a servo oil, is used to increase the pressure of the second fuel from the second fuel low pressure to the second fuel injection pressure.

A reservoir 62 for the hydraulic fluid is provided, from where the hydraulic fluid is pumped to a storage unit 63 containing the hydraulic fluid at a working pressure. The storage unit 63 is in fluid communication with each of the pressure amplifiers 61. Between the storage unit 63 and the pressure amplifier 61 a control valve 64 is provided in each case for opening and closing the fluid communication between the storage unit 63 and the respective pressure amplifier 61. Preferably, each control valve 64 is configured as a solenoid valve, which can be opened and closed by means of electric or electronic signals. Downstream of each pressure amplifier 61, i.e. between the pressure amplifier 61 and the dedicated second fuel injector 20, a non-return valve 65 is arranged to prevent a backflow of the pressurized second fuel into the respective pressure amplifier 61.

The second fuel supply system 7 comprises a second fuel reservoir 71 for the second fuel and a second fuel pump 72 for conveying the second fuel from the second fuel reservoir 71 to the fuel distribution system 6 with the second fuel low pressure. The second fuel supply system 7 is connected to a common inlet of the pressure amplifiers 61 by a delivery line 67 for supplying the second fuel from the second fuel supply system 7 to the pressure amplifiers 61. The delivery line 67 comprises a first non-return valve 68 arranged at the common inlet of the pressure amplifiers 61, and a second non-return valve 69 arranged at the outlet of the second fuel supply system 7. The first non-return valve 68 prevents a backflow of the second fuel from the pressure amplifiers 61 into the delivery line 67. The second non-return valve 69 prevents a backflow of the second fuel from the delivery line 67 into the second fuel supply system 7.

As an example, the second fuel low pressure, with which the second fuel is delivered from the second fuel supply system 7 to the pressure amplifiers 61 can be in the range of 10-20 bar (1-2 MPa). Preferably, the second fuel low pressure is at most 16 bar (1.6 MPa), for example around 13 bar (1.3 MPa). The pressure amplifiers 61 increases the pressure of the second fuel to the second fuel injection pressure of for example 300-700 bar (30-70 MPa). The second fuel injectors 20 inject the second fuel into the combustion chamber with at least approximately the second fuel injection pressure. The working pressure of the hydraulic fluid for operating the pressure amplifiers 61 is for example in the range of 200-400 bar (20-40 MPa). The working pressure may be e.g. around 300 bar (30 MPa).

The dual-fuel large diesel engine 1 further comprises a purge line 9 connecting the first fuel supply system 5 to the fuel distribution system 6 for the second fuel. Furthermore, a switching member 8 is provided for opening and closing a flow connection through the purge line 9. When the switching member 8 is in an open position, the first fuel can flow from the first fuel supply system 5 through the purge line 9 into the fuel distribution system 6. When the switching member 8 is in a closed position, the first fuel cannot flow from the first fuel supply system 5 through the purge line 9 into the fuel distribution system 6. Preferably, the switching member 8 is configured as a solenoid valve.

In the embodiment shown in Fig. 1 the purge line 9 is connected to the pressure reservoir 51 of the first fuel supply system 5 and to the delivery line 67 of the fuel supply system 6. The purge line 9 opens out into the delivery line 67 at a location between the first non-return valve 68 and the second non-return valve 69, namely downstream of the second non-return valve 69 and upstream of the first non-return valve 68.

When the switching member 8 is in the open position, the fuel distribution system 6 with the pressure amplifiers 61 and the delivery line 67 as well as the second fuel injectors 20 are purged with the first fuel.

When the flow connection through the purge line 9 is open, the purge line 9 supplies the first fuel to the fuel distribution system 6 with a first fuel low pressure. The first fuel low pressure is adjusted to a value, which is preferably at least 20% higher than the second fuel low pressure. Referring to the example given above, the first fuel low pressure is for example 3 bar (0.3MPa) higher than the second fuel low pressure. Since the first fuel low pressure is higher than the second fuel low pressure, the second non-return valve 69 is closed, when the fluid connection through the purge line 9 is open. The first fuel having the first fuel low pressure, which is higher than the second fuel low pressure, keeps the second non-return valve 69 closed, so that the second fuel cannot enter the delivery line 67, when the first fuel flows through the purge line 9 into the fuel distribution system 6.

When the purge line 9 is connected to the pressure reservoir 51 for the first fuel, it is preferred to reduce the pressure of the first fuel before the first fuel enters the fuel distribution system 6, because the pressure of the first fuel in the pressure reservoir 51 is typically considerably higher than the desired second fuel low pressure. To this end, it is a preferred measure to configure the switching member 8 as a pressure reducing valve for reducing the pressure of the first fuel to the desired first fuel low pressure.

In other embodiments the purge line 9 is connected to a low pressure line for the first fuel or to a low pressure reservoir of the first fuel supply system 5 rather than to the pressure reservoir 51. Depending on the location, to which the purge line 9 is connected in the first fuel supply system 5, it is possible that there is no need to reduce the pressure of the first fuel before entering the fuel distribution system 6.

During operation of the dual-fuel large diesel engine 1 the purge line 9 can be used to flush the fuel distribution system 6, the pressure amplifiers 61 and the second fuel injectors 20 with the first fuel, so that the second fuel is completely removed from the fuel distribution system 6 and the second fuel injectors 20. This will now be explained in more detail.

The dual-fuel large diesel engine 1 is configured for switching between a first operational mode, in which only the first fuel is supplied to the combustion chambers of the cylinders, and a second operational mode, in which the second fuel is supplied to the combustion chambers of the cylinders. In the second operational mode the first fuel can be used for the pilot ignition to ignite the second fuel. The switching from the first operational mode to the second operational mode and vice verso can be performed during operation of the engine without changing the load or the speed of the engine 1. In addition, it is also possible to operate the dual-fuel large diesel engine 1 in a third operational mode, in which both the first fuel injectors 10 and the second fuel injectors 20 are used to simultaneously inject the first fuel and the second fuel into the combustion chambers of the cylinders to generate the required torque.

Furthermore, the dual-fuel large diesel engine 1 is equipped with a gas venting system to enable evacuation of second fuel vapor from the cylinders and other compartments.

By means of the purge line 9 it is possible to avoid any residuals of the second fuel in the pressure amplifiers 61, in the second fuel injectors 20 and in all connecting pipes, such as the delivery line 67 during operation in the first operational mode, hence any corrosion caused by the second fuel is prevented as well as any leakage of the second fuel or vapor of the second fuel.

Avoiding any residuals of the second fuel in particular after the engine 1 is stopped has the additional advantage to avoid health hazards for the maintenance or operating crew.

Furthermore, by the purging with the first fuel an oil film can be created on the inner surfaces of the fuel distribution system 6 and the second fuel injectors 20. When the dual-fuel large diesel engine 1 is stopped said oil film ensures a durable corrosion protection during stand-still, inspections or service work.

Preferably, the purging with the first fuel is performed when the dual-fuel large diesel engine is switched from the second operational mode to the first operational mode or when the engine 1 is stopped.

Upon request to change from the second operational mode to the first operational mode the switching is performed in the following manner. The switching member 8 is changed from the closed position to the open position, so that the first fuel can flow from the first fuel supply system 5 through the purge line 9 into the fuel distribution system 6. The first fuel having the first fuel low pressure, which is higher than the second fuel low pressure, enters the delivery line 67. The first fuel passes through the first non-return valve 68 into the pressure amplifiers 61 and is injected into the combustion chamber by the second fuel injectors 20. In addition, the first fuel in the delivery line 67 closes the second non-return valve 69, so that the second fuel can no longer enter the delivery line 67. During the following strokes of the piston the first fuel displaces the second fuel from the pressure amplifiers 61 the delivery line 67 and the second fuel injectors 20.

During the transition time, in which the second fuel is flushed out, both the first fuel injectors 10 and the second fuel injectors 20 are in operation. Concurrently, a first amount of fuel is injected with the first fuel injectors 10, and a second amount of fuel is injected with the second injectors 20. The first amount and the second amount are adjusted such that the desired load or speed is maintained. The second amount is continuously reduced and concurrently the first amount is increased until the second amount equals zero.

After the second fuel has been completely removed from the fuel distribution system 6 and the second fuel injectors 20, the large diesel engine is operated in the first operational mode. The switching member 8 can be changed to the closed position.

During the transition time the load or the speed of the engine 1 can be adjusted by adjusting the opening/closing of the first fuel injectors 10 and/or the second fuel injectors 20 either fuel oil injector group or AF injector group or both simultaneously. The gradual reduction of the second amount of fuel injected with the second fuel injectors can be continued until the minimum stable level for the injection is reached.

As a basis for adjusting the first amount and the second amount the measurement of operational parameters, such as the cylinder pressure or cylinder temperature can be used.

When the dual-fuel large diesel engine 1 is operated in the second operational mode and shall be stopped, it is preferred to perform a switching from the second operational mode to the first operational mode prior to stopping the engine.

Regarding the configuration for purging the fuel distribution system 6 and the second fuel injectors 20 various variants are possible. Only a few of them are mentioned here by way of example.

A separate purge system may be provided for each branch comprising a pressure amplifier 61 and a dedicated second fuel injector 20. This renders possible the individual purging of each injection line comprising a pressure amplifier 61 and a second fuel injector 20. The injection lines can be purged simultaneously or sequentially.

A common purge system for all the cylinders of the dual-fuel large diesel engine can be provided.

The fuel distribution system 6 can have exactly one pressure amplifier 61 for all the second fuel injectors 20 of the respective cylinder. Said common pressure amplifier is feeding all second fuel injectors 20 of the respective cylinder.

Each second fuel injector 20 can be configured with a solenoid-actuated needle or with a spring-loaded needle.

The purge system can comprise a separate dedicated purge line for purging the needle area of the second fuel injector 20.

## Claims

1. A dual-fuel large diesel engine comprising at least one cylinder having a combustion chamber, wherein a piston is arranged in the cylinder for a reciprocating movement between a top dead center position and a bottom dead center position, wherein the cylinder is provided with a first fuel injector (10) for injecting a first main fuel into the combustion chamber, and a second fuel injector (20) for injecting a second main fuel into the combustion chamber, wherein the first main fuel is different from the second main fuel, the large diesel engine further comprising a first fuel supply system (5) for supplying the first main fuel to the cylinder and a second fuel supply system (7) for supplying the second main fuel to a fuel distribution system, wherein the fuel distribution system is configured to deliver the second main fuel from the second fuel supply system (7) to the second fuel injector (20), **characterized in that** a purge line (9) is provided connecting the first fuel supply system (5) to the fuel distribution system, wherein a switching member (8) is provided for opening and closing a flow connection through the purge line (9).

2. A dual-fuel large diesel in accordance with claim 1, wherein the second fuel supply system (7) is configured to supply the second main fuel to the fuel distribution system with a second fuel low pressure, and wherein the fuel distribution system comprises a pressure amplifier (61) for increasing the pressure of the second main fuel from the second fuel low pressure to a second fuel injection pressure.

3. A dual-fuel large diesel engine in accordance with claim 2, wherein the purge line (9) is configured to supply the first main fuel to the fuel distribution system with a first fuel low pressure, when the flow connection is open, wherein the first fuel low pressure is at least 20% larger than the second fuel low pressure.

4. A dual-fuel large diesel engine in accordance with claim 3, wherein the switching member (8) is configured for reducing the pressure of the first main fuel to the first fuel low pressure.

5. A dual-fuel large diesel engine in accordance with any one of the preceding claims, wherein a non-return device (69) is arranged between the purge line (9) and the second fuel supply system (7) for preventing a flow of the first main fuel into the second fuel supply system (7).

6. A dual-fuel large diesel engine in accordance with any one of the preceding claims, wherein the cylinder comprises a plurality of second fuel injectors (20).

7. A dual-fuel large diesel engine in accordance with claim 6, wherein the fuel distribution system comprises a plurality of pressure amplifiers (61), each of which is dedicated to exactly one of the second fuel injectors (20).

8. A dual-fuel large diesel engine in accordance with any one of claims 2-7, wherein each pressure amplifier (61) is integrated in a second fuel injector (20).

9. A dual-fuel large diesel engine in accordance with any one of the preceding claims, wherein the cylinder comprises a cylinder cover for delimiting the combustion chamber, and wherein each first fuel injector (10) as well as each second fuel injector (20) is arranged in the cylinder cover.

10. A dual-fuel large diesel engine in accordance with any one of the preceding claims, wherein the first main fuel is a diesel fuel for self-ignition in the combustion chamber.

11. A dual-fuel large diesel engine in accordance with any one of the preceding claims, wherein the second main fuel is methanol or ammonia.

12. A dual-fuel large diesel engine in accordance with any one of the preceding claims, configured as a longitudinally scavenged two-stroke large diesel engine.

13. A method for operating a dual-fuel large diesel engine configured according to any one of the preceding claims, comprising a switching from a second operational mode, in which only the second main fuel is supplied to the combustion chamber, to a first operational mode, in which only the first main fuel is supplied to the combustion chamber, **characterized in that** the switching comprises the steps of:
- operating the engine at a desired load or speed,
- actuating the switching member (8) to open the flow connection through the purge line (9),
- concurrently injecting a first amount of the first main fuel with the first fuel injectors (10) and a second amount of the second main fuel with the second fuel injectors (20) into the combustion chamber,
- continuously adjusting the first amount and the second amount such that the desired load or speed is maintained,
- reducing the second amount and increasing the first amount until the second amount equals zero.

14. A method in accordance with claim 13, wherein the switching is performed before the large diesel engine is stopped, such that the large diesel engine is stopped during operation in the first operational mode.

15. A method in accordance with claim 13 or claim 14, wherein the supply from the second main fuel to the fuel distribution system is prevented during the switching from the second operational mode to the first operational mode.

## Patentansprüche

1. Dual-Fuel-Grossdieselmotor, umfassend mindestens einen Zylinder mit einer Brennkammer, wobei ein Kolben in dem Zylinder für eine Hin- und Herbewegung zwischen einer oberen Totpunktposition und einer unteren Totpunktposition angeordnet ist, wobei der Zylinder mit einer ersten Kraftstoffeinspritzvorrichtung (10) zum Einspritzen eines ersten Hauptkraftstoffs in die Brennkammer und einer zweiten Kraftstoffeinspritzvorrichtung (20) zum Einspritzen eines zweiten Hauptkraftstoffs in die Brennkammer versehen ist, wobei sich der erste Hauptkraftstoff von dem zweiten Hauptkraftstoff unterscheidet, wobei der Grossdieselmotor ferner ein erstes Kraftstoffzufuhrsystem (5) zum Zuführen des ersten Hauptkraftstoffs zu dem Zylinder und ein zweites Kraftstoffzufuhrsystem (7) zum Zuführen des zweiten Hauptkraftstoffs zu einem Kraftstoffverteilungssystem umfasst, wobei das Kraftstoffverteilungssystem konfiguriert ist, um den zweiten Hauptkraftstoff von dem zweiten Kraftstoffzufuhrsystem (7) zu der zweiten Kraftstoffeinspritzvorrichtung (20) zu liefern, **dadurch gekennzeichnet, dass** eine Spülleitung (9) vorgesehen ist, die das erste Kraftstoffzufuhrsystem (5) mit dem Kraftstoffverteilungssystem verbindet, wobei ein Schaltelement (8) zum Öffnen und Schliessen einer Strömungsverbindung durch die Spülleitung (9) vorgesehen ist.

2. Dual-Fuel-Grossdieselmotor nach Anspruch 1, wobei das zweite Kraftstoffzufuhrsystem (7) konfiguriert ist, um den zweiten Hauptkraftstoff dem Kraftstoffverteilungssystem mit einem zweiten Kraftstoffniederdruck zuzuführen, und wobei das Kraftstoffverteilungssystem einen Druckverstärker (61) zum Erhöhen des Drucks des zweiten Hauptkraftstoffs von dem zweiten Kraftstoffniederdruck auf einen zweiten Kraftstoffeinspritzdruck umfasst.

3. Dual-Fuel-Grossdieselmotor nach Anspruch 2, wobei die Spülleitung (9) konfiguriert ist, um den ersten Hauptkraftstoff dem Kraftstoffverteilungssystem mit einem ersten Kraftstoffniederdruck zuzuführen, wenn die Strömungsverbindung offen ist, wobei der erste Kraftstoffniederdruck mindestens 20% grösser als der zweite Kraftstoffniederdruck ist.

4. Dual-Fuel-Grossdieselmotor nach Anspruch 3, wobei das Schaltelement (8) konfiguriert ist, um den Druck des ersten Hauptkraftstoffs auf den ersten Kraftstoffniederdruck zu reduzieren.

5. Dual-Fuel-Grossdieselmotor nach einem der vorhergehenden Ansprüche, wobei eine Rückschlagvorrichtung (69) zwischen der Spülleitung (9) und dem zweiten Kraftstoffzufuhrsystem (7) angeordnet ist, um eine Strömung des ersten Hauptkraftstoffs in das zweite Kraftstoffzufuhrsystem (7) zu verhindern.

6. Dual-Fuel-Grossdieselmotor nach einem der vorhergehenden Ansprüche, wobei der Zylinder eine Vielzahl von zweiten Kraftstoffeinspritzvorrichtungen (20) umfasst.

7. Dual-Fuel-Grossdieselmotor nach Anspruch 6, wobei das Kraftstoffverteilungssystem eine Vielzahl von Druckverstärkern (61) umfasst, von denen jeder genau einer der zweiten Kraftstoffeinspritzvorrichtungen (20) zugeordnet ist.

8. Dual-Fuel-Grossdieselmotor nach einem der Ansprüche 2-7, wobei jeder Druckverstärker (61) in eine zweite Kraftstoffeinspritzvorrichtung (20) integriert ist.

9. Dual-Fuel-Grossdieselmotor nach einem der vorhergehenden Ansprüche, wobei der Zylinder eine Zylinderabdeckung zum Begrenzen der Brennkammer umfasst, und wobei jede erste Kraftstoffeinspritzvorrichtung (10) sowie jede zweite Kraftstoffeinspritzvorrichtung (20) in der Zylinderabdeckung angeordnet ist.

10. Dual-Fuel-Grossdieselmotor nach einem der vorhergehenden Ansprüche, wobei der erste Hauptkraftstoff ein Dieselkraftstoff zur Selbstzündung in der Brennkammer ist.

11. Dual-Fuel-Grossdieselmotor nach einem der vorhergehenden Ansprüche, wobei der zweite Hauptkraftstoff Methanol oder Ammoniak ist.

12. Dual-Fuel-Grossdieselmotor nach einem der vorhergehenden Ansprüche, der als ein längsgespülter Zweitakt-Grossdieselmotor konfiguriert ist.

13. Verfahren zum Betreiben eines Dual-Fuel-Grossdieselmotors, der nach einem der vorhergehenden Ansprüche konfiguriert ist, umfassend ein Umschalten von einem zweiten Betriebsmodus, in welchem nur der zweite Hauptkraftstoff der Brennkammer zugeführt wird, in einen ersten Betriebsmodus, in welchem nur der erste Hauptkraftstoff der Brennkammer zugeführt wird, **dadurch gekennzeichnet, dass** das Umschalten die folgenden Schritte umfasst:
- Betreiben des Motors bei einer gewünschten Last oder Drehzahl,
- Betätigen des Schaltelements (8), um die Strömungsverbindung durch die Spülleitung (9) zu öffnen,
- gleichzeitiges Einspritzen einer ersten Menge des ersten Hauptkraftstoffs mit den ersten Kraftstoffeinspritzvorrichtungen (10) und einer zweiten Menge des zweiten Hauptkraftstoffs mit den zweiten Kraftstoffeinspritzvorrichtungen (20) in die Brennkammer,
- kontinuierliches Einstellen der ersten Menge und der zweiten Menge derart, dass die gewünschte Last oder Drehzahl aufrechterhalten wird,
- Reduzieren der zweiten Menge und Erhöhen der ersten Menge, bis die zweite Menge gleich Null ist.

14. Verfahren nach Anspruch 13, wobei das Umschalten durchgeführt wird, bevor der Grossdieselmotor gestoppt wird, derart, dass der Grossdieselmotor während des Betriebs im ersten Betriebsmodus gestoppt wird.

15. Verfahren nach Anspruch 13 oder Anspruch 14, wobei die Zufuhr von dem zweiten Hauptkraftstoff zu dem Kraftstoffverteilungssystem während des Umschaltens von dem zweiten Betriebsmodus in den ersten Betriebsmodus verhindert wird.

## Revendications

1. Grand moteur diesel bicarburant comprenant au moins un cylindre ayant une chambre de combustion, dans lequel un piston est agencé dans le cylindre pour un mouvement de va-et-vient entre une position de point mort haut et une position de point mort bas, dans lequel le cylindre est pourvu d'un premier injecteur de carburant (10) pour injecter un premier carburant principal dans la chambre de combustion, et d'un second injecteur de carburant (20) pour injecter un second carburant principal dans la chambre de combustion, dans lequel le premier carburant principal est différent du second carburant principal, le grand moteur diesel comprenant en outre un premier système d'alimentation en carburant (5) pour fournir le premier carburant principal au cylindre et un second système d'alimentation en carburant (7) pour fournir le second carburant principal à un système de distribution de carburant, dans lequel le système de distribution de carburant est configuré pour délivrer le second carburant principal du second système d'alimentation en carburant (7) au second injecteur de carburant (20), **caractérisé en ce qu'**une conduite de purge (9) est prévue reliant le premier système d'alimentation en carburant (5) au système de distribution de carburant, dans lequel un élément de commutation (8) est prévu pour ouvrir et fermer une connexion d'écoulement à travers la conduite de purge (9).

2. Grand moteur diesel bicarburant selon la revendication 1, dans lequel le second système d'alimentation en carburant (7) est configuré pour fournir le second carburant principal au système de distribution de carburant avec une seconde pression de carburant basse, et dans lequel le système de distribution de carburant comprend un amplificateur de pression (61) pour augmenter la pression du second carburant principal de la seconde pression de carburant basse à une seconde pression d'injection de carburant.

3. Grand moteur diesel bicarburant selon la revendication 2, dans lequel la conduite de purge (9) est configurée pour fournir le premier carburant principal au système de distribution de carburant avec une première pression de carburant basse, lorsque la connexion d'écoulement est ouverte, dans lequel la première pression de carburant basse est au moins 20 % supérieure à la seconde pression de carburant basse.

4. Grand moteur diesel bicarburant selon la revendication 3, dans lequel l'élément de commutation (8) est configuré pour réduire la pression du premier carburant principal à la première pression de carburant basse.

5. Grand moteur diesel bicarburant selon l'une quelconque des revendications précédentes, dans lequel un dispositif anti-retour (69) est agencé entre la conduite de purge (9) et le second système d'alimentation en carburant (7) pour empêcher un écoulement du premier carburant principal dans le second système d'alimentation en carburant (7).

6. Grand moteur diesel bicarburant selon l'une quelconque des revendications précédentes, dans lequel le cylindre comprend une pluralité de seconds injecteurs de carburant (20).

7. Grand moteur diesel bicarburant selon la revendication 6, dans lequel le système de distribution de carburant comprend une pluralité d'amplificateurs de pression (61), dont chacun est dédié à exactement l'un des seconds injecteurs de carburant (20).

8. Grand moteur diesel bicarburant selon l'une quelconque des revendications 2 à 7, dans lequel chaque amplificateur de pression (61) est intégré dans un second injecteur de carburant (20).

9. Grand moteur diesel bicarburant selon l'une quelconque des revendications précédentes, dans lequel le cylindre comprend un couvercle de cylindre pour délimiter la chambre de combustion, et dans lequel chaque premier injecteur de carburant (10) ainsi que chaque second injecteur de carburant (20) est agencé dans le couvercle de cylindre.

10. Grand moteur diesel bicarburant selon l'une quelconque des revendications précédentes, dans lequel le premier carburant principal est un carburant diesel pour l'auto-allumage dans la chambre de combustion.

11. Grand moteur diesel bicarburant selon l'une quelconque des revendications précédentes, dans lequel le second carburant principal est le méthanol ou l'ammoniac.

12. Grand moteur diesel bicarburant selon l'une quelconque des revendications précédentes, configuré comme un grand moteur diesel à deux temps balayé longitudinalement.

13. Procédé pour faire fonctionner un grand moteur diesel bicarburant configuré selon l'une quelconque des revendications précédentes, comprenant une commutation d'un second mode de fonctionnement, dans lequel seul le second carburant principal est fourni à la chambre de combustion, à un premier mode de fonctionnement, dans lequel seul le premier carburant principal est fourni à la chambre de combustion, **caractérisé en ce que** la commutation comprend les étapes consistant à :
- faire fonctionner le moteur à une charge ou vitesse souhaitée,
- actionner l'élément de commutation (8) pour ouvrir la connexion d'écoulement à travers la conduite de purge (9),
- injecter simultanément une première quantité du premier carburant principal avec les premiers injecteurs de carburant (10) et une seconde quantité du second carburant principal avec les seconds injecteurs de carburant (20) dans la chambre de combustion,
- ajuster en continu la première quantité et la seconde quantité de sorte que la charge ou vitesse souhaitée soit maintenue,
- réduire la seconde quantité et augmenter la première quantité jusqu'à ce que la seconde quantité soit égale à zéro.

14. Procédé selon la revendication 13, dans lequel la commutation est effectuée avant que le grand moteur diesel soit arrêté, de sorte que le grand moteur diesel soit arrêté pendant le fonctionnement dans le premier mode de fonctionnement.

15. Procédé selon la revendication 13 ou la revendication 14, dans lequel l'alimentation du second carburant principal au système de distribution de carburant est empêchée pendant la commutation du second mode de fonctionnement au premier mode de fonctionnement.
